(19)

Europäisches
Patentamt
European
Patent Office
Office européen
des brevets

(11) **EP 4 297 468 A1**

(12) **EUROPEAN PATENT APPLICATION**
published in accordance with Art. 153(4) EPC

(43) Date of publication:
**27.12.2023 Bulletin 2023/52**

(21) Application number: **22778560.7**

(22) Date of filing: **15.03.2022**

(51) International Patent Classification (IPC):
*H04W 24/02* (2009.01)          *H04W 28/08* (2023.01)
*H04W 48/16* (2009.01)          *H04W 48/20* (2009.01)

(52) Cooperative Patent Classification (CPC):
**H04W 24/02; H04W 28/08; H04W 48/16;
H04W 48/20**

(86) International application number:
**PCT/CN2022/081030**

(87) International publication number:
**WO 2022/206377 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 CN 202110350894**

(71) Applicant: **Huawei Technologies Co., Ltd.
Shenzhen, Guangdong 518129 (CN)**

(72) Inventors:
• LIU, Zhe
 **Shenzhen, Guangdong 518129 (CN)**
• PENG, Chenghui
 **Shenzhen, Guangdong 518129 (CN)**
• WU, Jianjun
 **Shenzhen, Guangdong 518129 (CN)**

(74) Representative: **Maiwald GmbH
Engineering
Elisenhof
Elisenstrasse 3
80335 München (DE)**

(54) **METHOD AND DEVICE FOR CELL SELECTION, STORAGE MEDIUM, AND COMPUTER PROGRAM PRODUCT**

(57) Embodiments of this disclosure relate to a cell selection method, a device, a storage medium, and a computer program product. The method provided herein includes: A terminal device receives a first message from a first network device; the terminal device determines, based on the first message, a first adjustment parameter associated with cell selection; the terminal device performs, based on the first adjustment parameter, signal measurement on a first cell corresponding to the first network device; and if a signal measurement result meets a cell selection criterion, the terminal device determines the first cell as a target cell for camping on. In a communication mechanism provided in this disclosure, by using an adjustment parameter related to cell selection, interaction between base stations and interaction between a base station and an operation, administration and maintenance device in a network can be reduced, and flexible and fast load balancing can be implemented inside a cell and between cells. In addition, a delay of accessing a cell by the terminal device can be further reduced, so that a delay of subsequent data transmission can be reduced.

400

```
┌──────────────────────────────────────────┐
│          Receive a first message         │ ─── 401
└──────────────────────────────────────────┘
                      │
                      ▼
┌──────────────────────────────────────────┐
│ Determine, based on the first message, a │ ─── 402
│   first adjustment parameter associated  │
│            with cell selection           │
└──────────────────────────────────────────┘
                      │
                      ▼
┌──────────────────────────────────────────┐
│ Perform, based on the first adjustment   │ ─── 403
│ parameter, signal measurement on a first │
│ cell corresponding to a first network    │
│ device                                   │
└──────────────────────────────────────────┘
                      │
                      ▼
            Does a signal measurement            ─── 404
          result meet a cell selection criterion?
                      │ Yes
                      ▼
┌──────────────────────────────────────────┐
│ Determine the first cell as a target cell│ ─── 405
│            for camping on                │
└──────────────────────────────────────────┘
```

FIG. 4

**Description**

This application claims priority to Chinese Patent Application No.202110350894.7, filed with the China National Intellectual Property Administration on March 31, 2021 and entitled "CELL SELECTION METHOD, DEVICE, STORAGE MEDIUM, AND COMPUTER PROGRAM PRODUCT", which is incorporated herein by reference in its entirety.

**TECHNICAL FIELD**

Embodiments of this disclosure generally relate to the field of communication technologies, and more specifically, to a cell selection method, a device, a storage medium, and a computer program product.

**BACKGROUND**

In a cellular mobile communication system, a base station (for example, a gNB) generally provides radio coverage and a corresponding network service in a specific area, and such an area is also referred to as a "cell". After being powered on, a terminal device such as user equipment (for example, UE) may access an appropriate cell by performing a cell selection process, to obtain network connectivity. The terminal device usually has mobility. When the terminal device moves out of coverage of a serving cell and enters a new cell, to keep a network service uninterrupted, the terminal device needs to camp on the new cell by performing a cell reselection process. The terminal device may perform an initial cell selection process after selecting a public land mobile network (Public land mobile network, PLMN), so that the terminal device determines, in the PLMN as soon as possible, a cell whose signal quality meets a requirement and camps on the cell. Similarly, after accessing an initial cell, the terminal device may measure signal quality of a current cell and a neighboring cell, and reselect a cell with better signal quality/a higher priority as a serving cell on which the terminal device is to camp.

However, both initial cell selection and cell reselection depend on autonomous behavior of the terminal device that is based on a measured signal level and/or measured signal quality. For example, when a large quantity of terminal devices select to camp on a cell 1 because a measured signal level and/or measured signal quality of the cell 1 are/is relatively good, and only a small quantity of terminal devices select to camp on a cell 2, load imbalance is caused. In addition, a large quantity of random access requests from the terminal devices in the cell 1 cause a conflict. Consequently, a random access failure is caused or a delay is increased. Even if some terminal devices can successfully access the cell 1, because load of the cell 1 is relatively high, the terminal devices may be handed over to another cell. From the perspective of a delay, this is unfavorable to data transmission of the terminal device.

**SUMMARY**

Generally, example embodiments of this disclosure provide a cell selection method, a device, a computer-readable storage medium, and a computer program product.

According to a first aspect of this disclosure, a cell selection method is provided. In the method, a terminal device receives a first message from a first network device; the terminal device determines, based on the first message, a first adjustment parameter associated with cell selection; the terminal device performs, based on the first adjustment parameter, signal measurement on a first cell corresponding to the first network device; and if a signal measurement result meets a cell selection criterion, the terminal device determines the first cell as a target cell for camping on.

In a first implementation of the first aspect, the first message may include a table of mapping between at least one service type and at least one candidate adjustment parameter. Additionally or alternatively, the first message may include at least one candidate adjustment parameter corresponding to at least one service type, and the at least one candidate adjustment parameter is determined by the first network device for the at least one service type based on cell load information of the first cell.

In a second implementation of the first aspect, in the method, the terminal device may determine the first adjustment parameter in the following manner: The terminal device selects, from the at least one candidate adjustment parameter, a candidate adjustment parameter corresponding to a service type of the terminal device as the first adjustment parameter.

In a third implementation of the first aspect, the first message may include cell load information of the first cell. In addition, in the method, the terminal device determines the first adjustment parameter in the following manner: The terminal device determines the first adjustment parameter based on the cell load information.

In a fourth implementation of the first aspect, the cell load information may include at least one of the following: a physical resource block utilization rate associated with the first cell, a quantity of terminal devices in an activated state, a radio resource management RRC connection capacity, a quantity of RRC connections, a random access channel delay, a cell capacity, and a transport network layer capacity.

In a fifth implementation of the first aspect, the method further includes: The terminal device performs signal measurement on a serving cell of the terminal device. In addition, in the method, the terminal device determines, in the following manner, the first cell as the target cell for camping on: If the signal measurement result of the first cell is better than a signal measurement result of the serving cell, the terminal device determines the first cell as the target cell for camping on.

In a sixth implementation of the first aspect, in the method, the terminal device performs the signal measurement on the serving cell in the following manner: The terminal device performs the signal measurement on the serving cell based on a second adjustment parameter. In the context of this disclosure, the second adjustment parameter is determined by the terminal device based on a second message received by the terminal device from a second network device corresponding to the serving cell and a service type of the terminal device.

In a seventh implementation of the first aspect, at least one of the first adjustment parameter and the second adjustment parameter is zero.

According to the method provided in the embodiments of this disclosure, flexible and dynamic cell selection can be implemented on a terminal device side. In the method, a result of comparing signal measurement and the cell selection criteria is adjusted based on real-time load statuses of the serving cell and a neighboring cell. In addition, the terminal device may select an appropriate adjustment parameter from the at least one adjustment parameter based on the service type and the requirement of the terminal device. In this way, personalized load balancing can be quickly implemented in a network.

According to a second aspect of this disclosure, a cell selection method is provided. In the method, a first network device generates a first message; and the first network device sends the first message to a terminal device, so that the terminal device determines, based on the first message, a first adjustment parameter associated with cell selection.

In a first implementation of the second aspect, the first message may include a table of mapping between at least one service type and at least one candidate adjustment parameter.

In a second implementation of the second aspect, the first network device may correspond to a first cell, the first message may include at least one candidate adjustment parameter corresponding to at least one service type, and the at least one candidate adjustment parameter may be determined by the first network device for the at least one service type based on cell load information of the first cell.

In a third implementation of the second aspect, the first network device may correspond to a first cell, and the first message may include cell load information of the first cell.

In a fourth implementation of the second aspect, the cell load information may include at least one of the following: a physical resource block utilization rate associated with the first cell, a quantity of terminal devices in an activated state, a radio resource management RRC connection capacity, a quantity of RRC connections, a random access channel delay, a cell capacity, and a transport network layer capacity.

According to the method provided in the embodiments of this disclosure, flexible and dynamic load balancing can be implemented within a cell or between cells. In the method, an adjustment parameter associated with a real-time load status of a base station is used to affect a cell selection process on a terminal device side, so that each base station can dynamically adjust cell load, and cell selection information of all base stations in an entire area does not need to be adjusted uniformly by using an OAM system. In addition, when determining the adjustment parameter, the base station may further consider service types and service requirements of various terminal devices, so as to implement personalized load balancing.

According to a third aspect of this disclosure, a terminal device is provided. The terminal device includes at least one processor and at least one memory including computer program code. The at least one memory and the computer program code may work with the at least one processor to enable the at least one processor to perform the method according to the first aspect of this disclosure.

According to a fourth aspect of this disclosure, a network device is provided. The terminal device includes at least one processor and at least one memory including computer program code. The at least one memory and the computer program code may work with the at least one processor to enable the at least one processor to perform the method according to the second aspect of this disclosure.

According to a fifth aspect of this disclosure, a computer-readable storage medium is provided. The computer-readable storage medium stores computer-executable instructions. When the computer-executable instructions are executed by a processor, the processor is enabled to perform the method according to the first aspect or the second aspect of this disclosure.

According to a sixth aspect of this disclosure, a computer program product is provided. The computer program product includes computer-executable instructions. When the computer-executable instructions are executed by a processor, the processor is enabled to perform the method according to the first aspect or the second aspect of this disclosure.

According to a seventh aspect of this disclosure, a communication apparatus is provided. The communication apparatus includes a determining unit, a measurement unit, and a transceiver unit. The transceiver unit is configured to receive a first message from a first network device. The determining unit is configured to determine, based on the first message received by the transceiver unit, a first adjustment parameter associated with cell selection. The measurement unit is configured to perform, based on the first adjustment parameter determined by the determining unit, signal measurement on a first cell corresponding to the first network device. The determining unit is further configured to: if a signal measurement result meets a cell selection criterion, determine the first cell as a target cell for camping on.

In a first implementation of the seventh aspect, the first message may include a table of mapping between at least one service type and at least one candidate adjustment parameter. Additionally or alternatively, the first message may include at least one candidate adjustment parameter corresponding to at least one service type, and the determining unit is further configured to determine the at least one candidate adjustment parameter for the at least one service type based on cell load information of the first cell.

In a second implementation of the seventh aspect, the determining unit is configured to select, from the at least one candidate adjustment parameter, a candidate adjustment parameter corresponding to a service type of the communication apparatus as the first adjustment parameter.

In a third implementation of the seventh aspect, the first message may include cell load information of the first cell, and the determining unit is configured to determine the first adjustment parameter based on the cell load information.

In a fourth implementation of the seventh aspect, the cell load information may include at least one of the following: a physical resource block utilization rate associated with the first cell, a quantity of terminal devices in an activated state, a radio resource management RRC connection capacity, a quantity of RRC connections, a random access channel delay, a cell capacity, and a transport network layer capacity.

In a fifth implementation of the seventh aspect, the measurement unit is further configured to perform signal measurement on a serving cell of the communication apparatus, and the determining unit is configured to: if the signal measurement result of the first cell is better than a signal measurement result of the serving cell, determine the first cell as the target cell for camping on.

In a sixth implementation of the seventh aspect, the measurement unit is configured to perform the signal measurement on the serving cell based on a second adjustment parameter, the transceiver unit is further configured to receive a second message from a second network device corresponding to the serving cell, and the determining unit is further configured to determine the second adjustment parameter based on the second message and a service type of the communication apparatus.

In a seventh implementation of the seventh aspect, at least one of the first adjustment parameter and the second adjustment parameter is zero.

According to an eighth aspect of this disclosure, a communication apparatus is provided. The communication apparatus includes a generation unit and a transceiver unit. The generation unit is configured to generate a first message. The transceiver unit is configured to send the first message to a terminal device, so that the terminal device determines, based on the first message, a first adjustment parameter associated with cell selection.

In a first implementation of the eighth aspect, the first message may include a table of mapping between at least one service type and at least one candidate adjustment parameter.

In a second implementation of the eighth aspect, the communication apparatus may correspond to a first cell, the first message may include at least one candidate adjustment parameter corresponding to at least one service type, and the generation unit is further configured to determine the at least one candidate adjustment parameter for the at least one service type based on cell load information of the first cell.

In a third implementation of the eighth aspect, the communication apparatus may correspond to a first cell, and the first message may include cell load information of the first cell.

In a fourth implementation of the eighth aspect, the cell load information may include at least one of the following: a physical resource block utilization rate associated with the first cell, a quantity of terminal devices in an activated state, a radio resource management RRC connection capacity, a quantity of RRC connections, a random access channel delay, a cell capacity, and a transport network layer capacity.

According to a ninth aspect of this disclosure, a communication apparatus is provided. The communication apparatus includes an input/output interface and a logic circuit. The input/output interface is configured to receive a first message from a first network device. The logic circuit is configured to perform the method according to the first aspect of this disclosure.

According to a tenth aspect of this disclosure, a communication apparatus is provided. The communication apparatus includes an input/output interface and a logic circuit. The input/output interface is configured to send a first message to a terminal device, so that the terminal device determines, based on the first message, a first adjustment parameter associated with cell selection. The logic circuit is configured to perform the method according to the second aspect of this disclosure.

In a cell selection mechanism provided in the embodiments of this disclosure, an adjustment parameter is introduced to dynamically adjust a cell selection process on a terminal device side, so that personalized load balancing can be implemented within a cell and between cells. In addition, the mechanism helps the terminal device determine and quickly access an appropriate cell, so that a data transmission delay can be effectively reduced.

## BRIEF DESCRIPTION OF DRAWINGS

The foregoing and other features, advantages, and aspects of embodiments of this disclosure become more obvious with reference to the accompanying drawings and with reference to the following detailed descriptions. In the accompanying drawings, same or similar reference numerals represent same or similar elements.

FIG. 1 is a schematic diagram of an example network environment in which example embodiments of this disclosure may be implemented;
FIG. 2 is a diagram of signaling interaction for initial cell selection according to an example embodiment of this disclosure;
FIG. 3 is a diagram of signaling interaction for cell reselection according to an example embodiment of this disclosure;
FIG. 4 is a flowchart of a cell selection method according to an example embodiment of this disclosure;
FIG. 5 is a flowchart of a cell selection method according to an example embodiment of this disclosure;
FIG. 6 is a block diagram of a communication apparatus according to an example embodiment of this disclosure; and
FIG. 7 is a block diagram of a communication apparatus according to an example embodiment of this disclosure.

## DESCRIPTION OF EMBODIMENTS

The following describes some example embodiments with reference to the accompanying drawings. Although example embodiments of this disclosure are shown in the accompanying drawings, it should be understood that this disclosure may be implemented in various forms, and should not be construed as being limited to the embodiments described herein. On the contrary, these embodiments are provided to thoroughly and completely understand this disclosure. It should be understood that the accompanying drawings and embodiments of this disclosure are merely used as examples, but are not intended to limit the protection scope of this disclosure.

Terms "communication network" and "wireless network" used in this specification mean a network that complies with any appropriate communication standard, such as long term evolution (LTE), LTE advanced (LTE-A), wideband code division multiple access (WCDMA), and high speed packet access (HSPA). In addition, communication between a terminal device and a network device in a communication network may be performed according to any appropriate generation communication protocol, including but not limited to first generation (1G), second generation (2G), 2.5G, 2.75G, third generation (3G), fourth generation (4G), 4.5G, and fifth generation (5G) communication protocols, and/or any other protocol that is currently known or to be developed in the future. The embodiments of this disclosure may be applied to various communication systems, including cellular and non-cellular communication systems. In view of the rapid communication development, certainly, there will also be future types of communication technologies and systems that can embody this disclosure. Therefore, the scope of this disclosure should not be considered to be limited to the systems described above. For the purpose of illustration, the embodiments of this disclosure are described with reference to a 5G communication system.

Terms "terminal device" and "user equipment" used in this specification mean any terminal device that can perform wireless communication. By way of example, and not limitation, the terminal device may also be referred to as a communication device, user equipment (UE), a subscriber station (SS), a portable subscriber station, a mobile station (MS), or an access terminal (AT). The terminal device may include but is not limited to a mobile phone, a cellular phone, a smartphone, an IP voice (VoIP) phone, a wireless local loop phone, a tablet computer, a wearable terminal device, a personal digital assistant (PDA), a portable computer, a desktop computer, an image capture terminal device (for example, a digital camera), a game terminal device, a music storage and playback device, a vehicle-mounted wireless terminal device, a wireless endpoint, a mobile station, a notebook computer built-in device (LEE), a notebook computer external device (LME), a USB dongle, a smart device, wireless customer premises equipment (CPE), an internet of things (IoT) device, a watch or another wearable device, a head mounted display (HMD), a vehicle, a drone, a medical device and application (for example, remote surgery), an industrial device and application (for example, a robot and/or another wireless device operating in industrial and/or automated processing chain environments), a consumer electronic device, a device commercial operation, an industrial wireless network, and/or the like. In the following descriptions, terms "terminal device", "communication device", "terminal", "user equipment", and "UE" may be used interchangeably.

A term "network device" used in this specification includes but is not limited to a base station (BS), a gateway, a registration management entity, and another appropriate device in a communication system. A term "base station" or "BS" represents a NodeB (NodeB or NB), an evolved NodeB (eNodeB or eNB), a new radio (NR) NB (also referred to as gNB), a remote radio unit (RRU), a radio head (RH), a remote radio head (RRH), a relay, or a low power node (for example, femto or pico). In addition, the network device may be a central unit (Central Unit, CU) or a distributed unit (Distributed Unit, DU). In some example embodiments, the CU and the DU may be placed in different locations. For example, the CU is placed in a central equipment room while the DU is placed in a high-traffic area. In some other example embodiments, the CU and the DU may alternatively be placed in a same location, for example, in a same equipment room or different components in a same rack.

A term "cell selection" used in this specification means a process in which a terminal device selects a cell with an appropriate frequency to camp on and uses the cell as a serving cell. In the context of this disclosure, "cell selection" may be "initial cell selection", that is, a process in which the terminal device selects an initial serving cell after completing PLMN selection, or may be "cell reselection", that is, a process in which the terminal device is handed over from a current cell to a neighboring cell. In some embodiments of this disclosure, the term "cell selection" may also include both "initial cell selection" and "cell reselection".

A term "include" and variants thereof used in this specification indicate open inclusion, that is, "include but is not limited to". Unless otherwise stated, a term "or" means "and/or". A term "based on" means "at least partially based on". Terms "example embodiments" and "some embodiments" represent "at least one example embodiment". Other explicit and implicit definitions may also be included below.

The cell selection process involves a radio resource management (Radio Resource Management, RRM) mechanism, and a cellular mobile communication system may implement load balancing within coverage by using the RRM mechanism. Depending on a radio resource control (Radio Resource Control, RRC) status of the terminal device, different RRM processes may be triggered. For example, for a terminal device in an RRC_IDLE (RRC idle) state, RRM involves an initial cell selection process and a cell reselection process. For a terminal device in an RRC_INACTIVE (RRC inactive) state, RRM mainly involves a cell reselection process. For a terminal device in an RRC_CONNECT (RRC connected) state, RRM involves inter-cell mobility management and intra-cell beam handover management.

Initial cell selection in cell selection is classified into two types. In the first type, the terminal device does not have prior information of a candidate cell to identify a communication system frequency, and needs to perform initial cell selection. The process may include scanning a system carrier frequency, receiving and measuring a synchronization signal block (Synchronization Signal Block, SSB) signal, evaluating cell signal quality, decoding a master information block (Master Information Block, MIB) and a system information block (System Information Block, SIB), and then determining, based on an SSB measurement result and information in the MIB and the SIB, whether a current cell is suitable for camping on. In the second type, the terminal device stores information related to a system carrier frequency and a cell parameter when the terminal device is powered off last time. Therefore, when the terminal device is powered on again, the terminal device may preferentially measure a cell that stores related information of the terminal device. If there is a cell whose measurement result meets a requirement, the terminal device selects to camp on the cell. If no measurement result of a stored cell meets the requirement, the terminal device continues to select, based on the first type of initial cell selection process, a cell for camping on.

The terminal device may determine reference signal received power (Reference Signal Received Power, RSRP) and reference signal received quality (Reference Signal Received Quality, RSRQ) based on measurement results of reference signals such as an SSB, a synchronization signal (Synchronization Signal), and a channel state information reference signal (Channel State Information-Reference signal, CSI-RS), to evaluate cell signal quality. Then, the terminal device may determine, based on a cell selection related parameter in the SIB message and a cell selection criterion, whether the signal quality of the candidate cell meets the requirement and the candidate cell is suitable for camping on. As an example of the cell selection criterion, the terminal device may usually determine a signal measurement result of the candidate cell by using an S criterion. Table 1 shows cell selection related parameters involved in the S criterion.

**Table 1-Cell selection related parameters**

| Srxlev | Cell selection receive level value (dB) |
|---|---|
| Squal | Cell selection quality value (dB) |
| $Q_{offsettemp}$ | Temporary offset, which is used for a cell with a connection setup failure (dB) |
| $Q_{rxlevmeas}$ | RSRP measured by the terminal device from the current cell |
| $Q_{qualmeas}$ | RSRQ measured by the terminal device from the current cell |
| $Q_{rxlevmin}$ | Minimum receive level (dBm) required for accessing (or camping on) the current cell, which can be configured through q-RxLevMin in SIB1, SIB3, and SIB5 |
| $Q_{qualmin}$ | Minimum quality requirement (dB) for accessing (or camping on) the current cell |
| $Q_{rxlevminoffset}$ | Offset value corresponding to $Q_{rxlevmin}$ |
| $Q_{qualminoffset}$ | Offset value corresponding to $Q_{qualmin}$ |

(continued)

| $P_{compensation}$ | If the terminal device supports additionalPmax in NS-PmaxList carried in the system message SIB1/SIB3/SIB5, a value is max(PEMAX1 - PPowerClass, 0) - (min(PEMAX2, PPowerClass) - min(PEMAX1, PPowerClass)) (dB). If the terminal device does not support additionalPmax, a value is max(PEMAX1 - PPowerClass, 0) (dB). |
| --- | --- |
| PEMAX1, PEMAX2 | Maximum uplink transmit power (dBm) allowed by the terminal device in a cell that is currently measured, where PEMAX1 and PEMAX2 may be respectively obtained from p-Max and NS-PmaxList in the system message SIB1/SIB3/SIB5. |
| PPowerClass | Maximum RF output power (dBm) based on a power type of the terminal device |

With reference to the parameters in Table 1, the cell selection receive level value Srxlev and the cell selection quality value Squal in the S criterion may be determined according to Formula (1) and Formula (2). If the measurement results Srxlev and Squal meet Srxlev > 0 and Squal > 0, the cell may be selected as a cell to be camped on:

$$\text{Srxlev} = Q_{rxlevmeas} - (Q_{rxlevmin} + Q_{rxlevminoffset}) - P_{compensation} - Q_{offsettemp} \; (1)$$

$$\text{Squal} = Q_{qualmeas} - (Q_{qualmin} + Q_{qualminoffset}) - Q_{offsettemp} \; (2)$$

The terminal device in an RRC idle state or an RRC inactive state may start RRM measurement on a neighboring cell by comparing priorities of the neighboring cell and a serving cell and signal quality of the serving cell, so as to camp on a cell with a higher priority or better signal quality. Cell reselection may be classified into intra-frequency cell reselection and inter-frequency cell reselection. Intra-frequency cell reselection means that cell reselection is performed on a same frequency. This process does not involve a frequency priority. Inter-frequency cell reselection includes inter-frequency cell reselection and inter-system cell reselection. A cell to be camped on finally is selected based on a frequency priority. A cell participating in reselection may be indicated by a neighboring cell list carried in the SIB message, or may be a cell detected by the terminal device in the reselection process.

Specific conditions for intra-frequency cell reselection are as follows: 1. The terminal device camps on a current serving cell for a period of time longer than, for example, 1 second. 2. The current serving cell of the terminal device does not meet Srxlev > $S_{intraSearchP}$ and Squal > $S_{intraSearchQ}$, where $S_{intraSearchP}$ represents an intra-frequency reselection level threshold in a cell reselection system message 2, and $S_{intraSearchQ}$ represents an intra-frequency reselection signal quality threshold in the cell reselection system message 2. In this case, the intra-frequency cell reselection process is started.

A specific condition for inter-frequency cell reselection is as follows: A current serving cell of the terminal device does not meet Srxlev > $S_{nonIntraSearchP}$ and Squal > $S_{nonIntraSearchQ}$, where $S_{nonIntraSearchP}$ represents an inter-frequency reselection level threshold in a cell reselection system message 2, and $S_{nonIntraSearchQ}$ represents an inter-frequency reselection signal quality threshold in the cell reselection system message 2. In this case, the inter-frequency cell reselection process is started.

During cell reselection, the terminal device measures SSB signal quality of a neighboring cell, then sorts signal quality of a serving cell and the neighboring cell based on a cell reselection criterion, and selects a cell with good signal quality as a cell to camp on. As an example of the cell reselection criterion, the terminal device may usually determine signal measurement results of the serving cell and the neighboring cell by using an R criterion. Table 2 shows cell reselection related parameters involved in the R criterion.

**Table 2-Cell reselection related parameters**

| Rs | R value of the serving cell (dB) |
| --- | --- |
| Rn | R value of the neighboring cell (dB) |
| $Q_{meas}$ | RSRP value measured on a cell used for reselection (dBm) |
| $Q_{hyst}$ | Hysteresis threshold of a ranking standard, avoiding a ping-pong effect during cell reselection |
| $Q_{offset}$ | When intra-frequency reselection is performed, if $Q_{offsets,n}$ is valid, a value is $Q_{offsets,n}$; otherwise, a value is 0. |

(continued)

| | |
|---|---|
| | When inter-frequency reselection is performed, if $Q_{offsets,n}$ is valid, a value is $Q_{offsets,n}$ + Qoffsetfrequency, Otherwise, a value is $Q_{offsetfrequency}$. |
| $Q_{offsettemp}$ | Temporary offset, which is used for a cell with a connection setup failure (dB) |

With reference to the parameters in Table 2, the R value of the serving cell and the R value of the neighboring cell in the R criterion may be determined according to Formula (3) and Formula (4):

$$Rs = Q_{means,s} + Q_{hyst} - Q_{offsettemp} \quad (3)$$

$$Rn = Q_{means,n} + Q_{offset} - Q_{offsettemp} \quad (4)$$

Apparently, if the terminal device performs cell selection only based on the cell selection information (for example, $Q_{rxlevmin}$, $Q_{rxlevminoffset}$, $Q_{qualmin}$, $Q_{qualminoffset}$, and $Q_{offset}$) in the system message and based on the S criterion or the R criterion, the foregoing load imbalance may occur.

In a conventional network, to relieve load imbalance in a specific area, an intra-frequency cell may report cell load information to an operation, administration and maintenance (Operation, Administration Maintenance, OAM) system. The OAM system adjusts the parameters such as $Q_{rxlevmin}$, $Q_{rxlevminoffset}$, $Q_{qualmin}$, and $Q_{qualminoffset}$ based on the information, so as to change coverage of each base station and achieve load balancing. In this manner, the base station needs to report the load information to the OAM system, and a speed of achieving load balancing is slow. In addition, to avoid a case in which a coverage hole is caused by only reducing coverage of a single cell, the OAM system needs to adjust coverage of all base stations in the area uniformly. Consequently, the adjustment manner is not flexible enough.

For an inter-frequency cell, cell load information needs to be exchanged between base stations and the parameter $Q_{offset}$ needs to be configured by using the system message, so as to achieve load balancing in the area. In addition, when the terminal device changes from an RRC connected state to an RRC idle state, the communication system may set different priorities for inter-frequency cells by using RRC signaling, to control a quantity of terminal devices connected to each frequency, thereby implementing load balancing. This manner depends on signaling interaction between base stations or can be implemented only when an RRC state of the terminal device changes.

In addition, in the conventional load balancing mechanism described above, the terminal device cannot autonomously select an appropriate cell to camp on based on the cell load information. Consequently, an access delay is increased, and subsequent data transmission is affected.

To resolve the foregoing problems and other potential problems in the current communication system, embodiments of this disclosure provide a cell selection mechanism. In this mechanism, a real-time load status of a cell, service types of various terminal devices, and service requirements are considered, so that the terminal device can autonomously select an appropriate cell to camp on based on an adjustment parameter related to cell selection. In addition, the mechanism does not need to depend on unified adjustment of the entire area by the OAM system. This helps accelerate a load balancing speed, so that the terminal device quickly accesses a cell, thereby reducing a delay of subsequent data transmission.

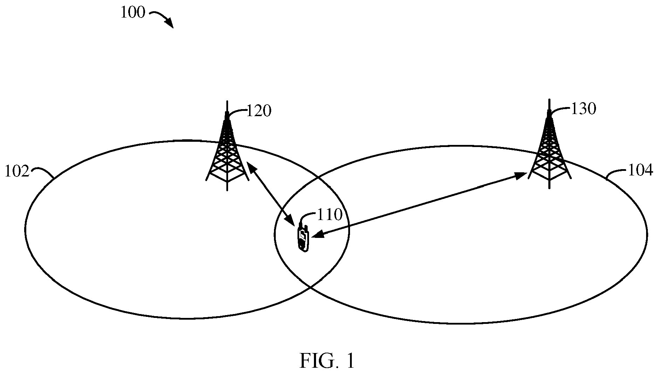

An example cell selection process according to embodiments of this disclosure may be discussed below with reference to FIG. 1 to FIG. 7.

FIG. 1 is a schematic diagram of an example network environment 100 in which example embodiments of this disclosure may be implemented. As shown in FIG. 1, the network environment 100 may provide network coverage for user equipment (for example, a terminal device 110) in a specific area. A first network device 120 corresponds to a first cell 102, and a second network device 130 corresponds to a second cell 104. It should be understood that the network environment 100 is used for example purposes only and does not imply any limitation on the scope of this disclosure. Embodiments of this disclosure may also be embodied in another network environment or architecture. In addition, it should be further understood that the network environment 100 may further include another element or entity configured to implement communication connection, data transmission, or the like. For simplicity of description, these elements or entities are not shown in FIG. 1, but it does not mean that the embodiments of this disclosure do not have these elements or entities.

In the context of this disclosure, the first network device 120 and the second network device 130 may also be collectively referred to as a network device. Network devices can communicate with each other. For example, the first network device 120 and the second network device 130 may respectively monitor load statuses of the first cell 102 and the second cell 104, and exchange cell load information through an interface (for example, X2 or S1). In addition, the network device may further send the load information to an OAM device (not shown), and the OAM device reallocates load between cells or between co-coverage cells based on a load status, a service type, a cell configuration, and the like of each cell in the network environment 100.

The network device may further communicate with the terminal device 110. In an example, the first network device 120 and the second network device 130 may transmit various RRC protocol-based signaling messages to the terminal device 110, to control processes such as RRC connection establishment, configuration, and release of the terminal device 110. In another example, the first network device 120 and the second network device 130 each may send a system message to the terminal device 110, where the system message includes but is not limited to an MIB, SIB 1, SIB2, SIB3, SIB4, and SIB5. The SIB message may include a cell selection related parameter, for example, cell selection information involved in an S criterion and an R criterion. In some embodiments of this disclosure, the network device may further send the cell load information or indicate one or more adjustment parameters associated with cell selection to the terminal device 110, which may be discussed in detail below.

In some example embodiments of this disclosure, the cell load information may include but is not limited to a physical resource block (Physical Resource Block, PRB) utilization rate associated with a cell (for example, an uplink/downlink PRB utilization rate, an uplink/downlink guaranteed bit rate (Guaranteed Bit Rate, GBR) PRB utilization rate, an uplink/downlink non-GBR PRB utilization rate, or a physical downlink control channel (Physical Downlink Control Channel, PDCCH) control channel basic unit (Control Channel element, CCE) utilization rate), a quantity of RRC connections (for example, a quantity of users in an RRC connected state, a quantity of RRC connections, or an RRC connection capacity), random access delay information (for example, a quantity of times that one terminal device needs to send a random access preamble from an idle state to a connected state), cell capacity information (for example, a capacity of each cell, or an available uplink/downlink capacity corresponding to each SSB), a transport network layer capacity (for example, a used capacity or an available capacity of an uplink/downlink transport network layer), and the like.

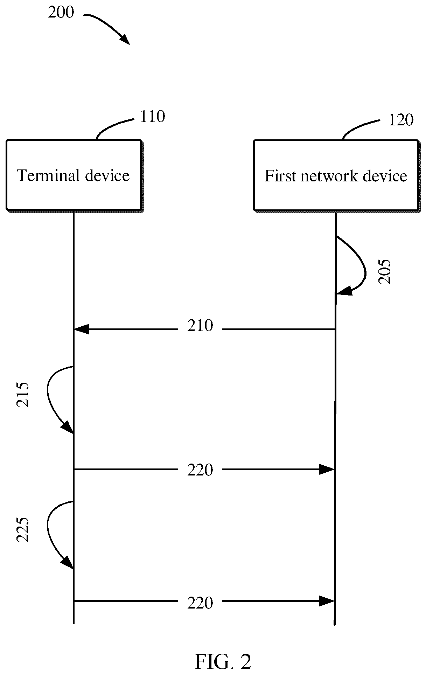

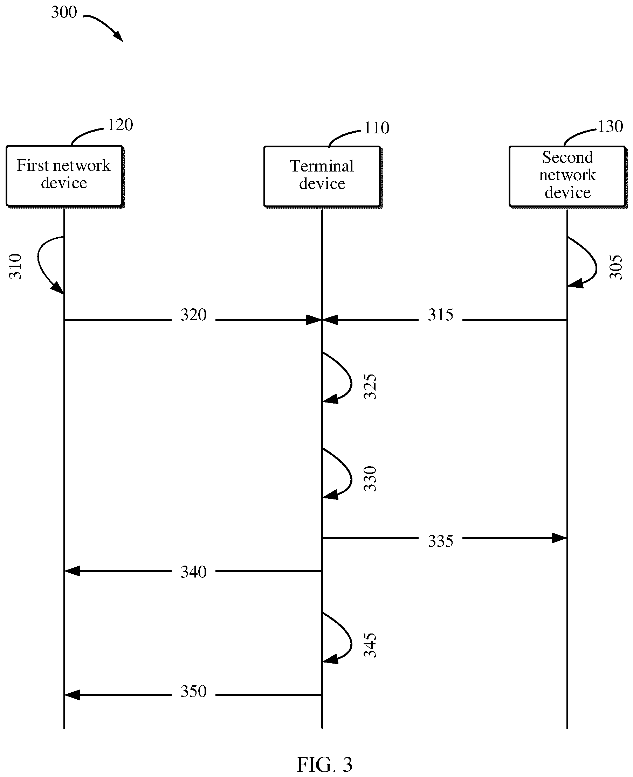

The terminal device 110 may move in the area, so as to possibly start a cell selection process and correspondingly camp on the cell 102 or 104. In some example embodiments, the terminal device 110 may perform an initial cell selection process shown in FIG. 2 or a cell reselection process shown in FIG. 3 in the first cell 102 and the second cell 104 based on at least one of the cell selection related parameter, the cell load information, and the adjustment parameter associated with cell selection that are obtained from each of the first network device 120 and the second network device 130. In some other example embodiments, when selecting a cell for camping on, the terminal device 110 may further consider a service type or a service requirement of the terminal device 110.

In some example embodiments of this disclosure, one or more of the terminal device 110 and the network devices 120 and 130 may be provided with a module configured to determine an adjustment parameter, and the module may be implemented based on a machine learning algorithm. Machine learning algorithms may be classified into supervised learning, unsupervised learning, and reinforcement learning algorithms based on training methods.

Supervised learning is a calculation method in which a data set and a given correct answer (for example, data labeling) are provided for an algorithm and then a machine learns the correct answer through data. In unsupervised learning, a provided data set has no "correct answer", and is designed to mine a potential structure from a given data set. Reinforcement learning focuses on how an agent takes a series of actions in an environment to maximize cumulative return. Reinforcement learning includes value-based and policy-based methods, and the two methods can be combined to obtain an Actor-Critic method. Embodiments of this disclosure are not limited to the specific machine learning methods and architectures described above, and are applicable to any machine learning method that is currently known or to be developed in the future.

The network environment 100 according to this embodiment of this disclosure may be a wireless network that complies with any protocol that is currently known or to be developed in the future, including but not limited to a narrowband internet of things (Narrowband Internet of Things, NB-IoT), a global system for mobile communications (Global System for Mobile Communications, GSM), an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a long term evolution (Long Term Evolution, LTE) system, and three application scenarios of a 5G mobile communication system: eMBB, URLLC, and eMTC.

FIG. 2 is a diagram of signaling interaction for an initial cell selection process 200 according to an example embodiment of this disclosure. The example interaction process 200 may involve the terminal device 110 and the first network device 120 shown in FIG. 1. For the purpose of discussion, the process 200 is described below with reference to FIG. 1, but it should be understood that the process is also applicable to another communication scenario and device.

The first network device 120 may broadcast, by using a system message, cell selection information in the first cell 102 corresponding to the first network device 120, for example, parameters such as $Q_{rxlevmin}$, $Q_{rxlevminoffset}$, $Q_{qualmin}$, and $Q_{qualminoffset}$ involved in an S criterion, so that the terminal device 110 that attempts to access the first cell 102 performs a cell selection process by using the cell selection information. In addition, the first network device 120 monitors a load status of the first cell 102, and determines cell load information. Therefore, in some example embodiments, the first network device 110 may further add the determined cell load information to the system message.

In 205, the first network device 120 generates a first message. The first message may be the system message including the cell selection information, or another system message. The first message may cause the terminal device 110 that attempts to access the first cell 102 to determine a first adjustment parameter $Q_{UE}$ associated with cell selection. In some example embodiments, when performing signal measurement on a candidate cell based on a cell selection criterion, the terminal device 110 may process a measurement result by using the first adjustment parameter $Q_{UE}$. For example, when selecting an initial cell based on an S criterion, the terminal device 110 may apply the first adjustment parameter $Q_{UE}$ to either or both of Formula (1) and Formula (2). The following provides detailed descriptions.

The first message may indicate the first adjustment parameter $Q_{UE}$ in various manners. In some example embodiments, the first message may include the cell load information of the first cell 102. For example, the cell load information may include a PRB utilization rate associated with the first cell 102, a quantity of terminal devices in an activated state, a radio resource management RRC connection capacity, a quantity of RRC connections, a RACH delay, a cell capacity, and a transport network layer capacity. In this embodiment, the terminal device 110 may determine the first adjustment parameter $Q_{UE}$ based on the received cell load information.

In some example embodiments, the first network device 120 may determine at least one corresponding candidate adjustment parameter for at least one terminal device service type based on the cell load information of the first cell 102. In an example, the first network device 120 determines a plurality of candidate adjustment parameters $Q_{UE,1}$, $Q_{UE,2}$, and $Q_{UE,3}$. In such an example, the first message may include the plurality of candidate adjustment parameters $Q_{UE,1}$, $Q_{UE,2}$, and $Q_{UE,3}$. Alternatively, the first message may include a table of mapping between at least one terminal device service type and at least one candidate adjustment parameter. In this way, the terminal device 110 may select an appropriate adjustment parameter based on a service type or a service requirement of the terminal device 110.

The first network device 120 may determine a candidate adjustment parameter $Q_{UE,i}$ according to Formula (5):

$$Q_{UE,i} = a * \log (\text{Quantity of available PRBs/PRB threshold}) + b * (\text{RACH delay/RACH delay threshold}) +$$
$$c * (\text{Quantity of RRC connections/RRC connection quantity threshold}) \quad (5)$$

Herein, $Q_{UE,i}$ represents the $i^{th}$ terminal device service type, and a, b, and c represent coefficients related to load balancing information. For example, in Formula (5), a represents a coefficient related to a PRB utilization rate, b represents a coefficient related to the RACH delay, and c represents a coefficient related to the quantity of RRC connections.

It should be understood that the cell load information and the calculation method shown in Formula (5) are merely an example, and are not a limitation. In practice, the coefficients and information in Formula (5) may be modified, added, or reduced as required, or different calculation methods may be used. It should be further understood that a service type or a service requirement of a terminal device is not limited to the foregoing type or requirement based on a bandwidth, an access delay, or a quantity of RRC connections, and may further include another existing type or requirement or a future type or requirement, and a combination of a plurality of different types or requirements. Therefore, the first network device 120 may also determine more or fewer candidate adjustment parameters as required. Example embodiments of this disclosure are not limited in this respect.

In addition, to obtain a more accurate candidate adjustment parameter $Q_{UE,i}$, an AI algorithm or a reinforcement learning model may be used to calculate $Q_{UE,i}$, and the coefficients a, b, and c related to the load balancing information, the associated thresholds, and the like in Formula (5) are iteratively updated. When the network device runs for a period of time, if current service load of a cell that is obtained through calculation does not match a target load status of the cell, the reinforcement learning model may be used to adjust the coefficients a, b, and c, so that the service load of the cell evolves towards the target load status.

In some example embodiments, values of the coefficients a, b, and c related to the load balancing information may depend on the terminal device service type. In an example, for a service type that requires a large bandwidth, the coefficient a related to the PRB utilization rate may be relatively large, for example, a = 10, and the other coefficients may be relatively small, for example, b = -0.01, and c = -0.01. This indicates that the adjustment parameter $Q_{UE,i}$ corresponding to this terminal device service type is mainly determined based on the PRB utilization rate. Particularly, the coefficients b and c may alternatively be 0. When the AI algorithm is used, if the quantity of available PRBs is greater than a PRB threshold hyper-parameter of the AI algorithm, an obtained value of the adjustment parameter $Q_{UE}$ is positive; or if the quantity of available PRBs is less than the PRB threshold hyper-parameter of the AI algorithm, an obtained value of the adjustment parameter $Q_{UE}$ is negative.

In another example, for a service type that requires a low access delay, the coefficient b related to the RACH access delay may be relatively large, for example, b = -10, and the other coefficients may be relatively small, for example, a = 0.01, and c = -0.01. This indicates that the adjustment parameter $Q_{UE,i}$ corresponding to this terminal device service type is mainly determined based on the RACH delay. Particularly, the coefficients a and c may alternatively be 0. In an embodiment in which the AI algorithm is used, if the RACH delay is greater than a RACH delay threshold hyper-parameter of the AI algorithm, an obtained value of the adjustment parameter $Q_{UE,i}$ is negative; or if the RACH delay is less than the RACH delay threshold hyper-parameter of the AI algorithm, an obtained value of the adjustment parameter $Q_{UE,i}$ is positive.

In still another example, for a service type that requires a quantity of RRC connections, the coefficient c related to the quantity of RRC connections may be relatively large, for example, c = -10, and the other coefficients may be relatively small, for example, a = 0.01, and b = 0.01. This indicates that the adjustment parameter $Q_{UE}$ corresponding to this terminal device service type is mainly determined based on the quantity of RRC connections. Particularly, the coefficients a and b may alternatively be 0. In an embodiment in which the AI algorithm is used, if the quantity of RRC connections is greater than an RRC connection quantity threshold hyper-parameter of the AI algorithm, an obtained value of the adjustment parameter $Q_{UE,i}$ is negative; or if the quantity of RRC connections is less than the RRC connection quantity threshold hyper-parameter of the AI algorithm, an obtained value of the adjustment parameter $Q_{UE,i}$ is positive.

In 210, the first network device 120 sends the first message to the terminal device 110. In some example embodiments, the first network device 120 may determine, based on a processing capability of the first network device 120 or a processing capability of the terminal device 110, a specific form in which the first message indicates the first adjustment parameter $Q_{UE}$.

In 215, the terminal device 110 may determine, based on the received first message, the first adjustment parameter $Q_{UE}$ associated with cell selection. For example, in an embodiment in which the first message includes the cell load information of the first cell 102, the terminal device 110 may determine the first adjustment parameter $Q_{UE}$ according to Formula (5) or different calculation manners. In addition, when determining the first adjustment parameter $Q_{UE}$, the terminal device 110 may further consider the service type or the service requirement of the terminal device 110. Similarly, the terminal device 110 may alternatively determine the first adjustment parameter $Q_{UE}$ by using the AI algorithm, and iteratively update the coefficients a, b, and c related to the load balancing information in Formula (5). A manner in which the terminal device 110 determines the first adjustment parameter $Q_{UE}$ based on the cell load information is similar to the foregoing manner implemented by the first network device 120. Therefore, details are not described herein again. In some example embodiments, the terminal device 110 may not have a module configured to determine the first adjustment parameter $Q_{UE}$. For example, the terminal device 110 has no AI algorithm. In this case, the first adjustment parameter $Q_{UE}$ may be set to 0 by default.

In an embodiment in which the first message includes the at least one candidate adjustment parameter $Q_{UE,1}$, $Q_{UE,2}$, and $Q_{UE,3}$, or the first message includes the table of mapping between at least one terminal device service type and at least one candidate adjustment parameter, the terminal device 110 may directly select a candidate adjustment parameter corresponding to the service type or the service requirement of the terminal device 110 from the candidate adjustment parameters $Q_{UE,1}$, $Q_{UE,2}$, and $Q_{UE,3}$ as the first adjustment parameter $Q_{UE}$.

In 220, the terminal device 110 performs signal measurement on the first cell 102 and obtains a signal measurement result based on the determined first adjustment parameter $Q_{UE}$. For example, the terminal device 110 may obtain an S criterion-based measurement result according to Formula (6) and Formula (7):

$$Srxlev' = Q_{rxlevmeas} - (Q_{rxlevmin} + Q_{rxlevminoffset}) - P_{compensation} - Q_{offsettemp} + Q_{UE} \qquad (6)$$

$$Squal' = Q_{qualmeas} - (Q_{qualmin} + Q_{qualminoffset}) - Q_{offsettemp} + Q_{UE} \qquad (7)$$

It should be understood that the manner of adjusting the signal measurement result by using the first adjustment parameter $Q_{UE}$ shown in Formula (6) and Formula (7) is merely an example, and is not a limitation. In practice, Formula (6) and Formula (7) may be modified or replaced as required.

In some example embodiments, the terminal device 110 may apply the first adjustment parameter $Q_{UE}$ to at least one of Formula (6) and Formula (7). Additionally or alternatively, the terminal device 110 may apply the first adjustment parameter $Q_{UE}$ to at least one monomial in Formula (6) and Formula (7), for example, $Q_{UE} * Q_{rxlevmeas}$ or $Q_{rxlevmeas}{}^{\wedge}(QUE)$. A specific adjustment form is not limited.

In 225, the terminal device 110 determines whether the signal measurement result of the first cell 102 meets the cell selection criterion. For example, in an S criterion-based embodiment, the terminal device 110 determines whether the signal measurement result of the first cell 102 meets Srxlev' > 0 and Squal' > 0. If the terminal device 110 determines, in 225, that the signal measurement result of the first cell 102 meets the cell selection criterion, in 230, the terminal device 110 determines the first cell 102 as a target cell for camping on.

On the contrary, if the terminal device 110 determines, in 225, that the signal measurement result of the first cell 102 does not meet the cell selection criterion, the terminal device 110 may continue to repeat steps 205 to 225 for another cell (for example, the cell 104 corresponding to the second network device 130) until the target cell for camping on is determined. After scanning all frequencies supported by the terminal device 110, if the terminal device 110 finds no cell that meets the cell selection criterion, the terminal device 110 may adjust a module configured to determine an adjustment parameter to change an output $Q_{UE}$, and enter any cell camping state, so as to trigger a cell reselection process.

It should be understood that although the operations in the process 200 are described in a particular order, this should not be understood as requiring the operations to be completed in the particular order shown or in a sequential order, or performing all of the illustrated operations to obtain a desired result. Similarly, although the foregoing descriptions include some specific implementation details, this should not be construed as limiting the scope of any invention or claims, but rather as descriptions of specific example embodiments that may be specific to a particular invention. Some features described in this specification in the context of separate example embodiments may alternatively be integrated into a single example embodiment. Conversely, various features that are described in the context of a single example embodiment may alternatively be implemented separately in a plurality of example embodiments or in any appropriate sub-combination.

According to an example embodiment of this disclosure, a cell selection mechanism is provided. In the mechanism, a terminal device may autonomously select, based on load information that is broadcast by a network side or an adjustment parameter that is associated with cell selection and that is provided by the network side, a cell whose load status meets a requirement for camping on. In addition, in this manner, personalized dynamic adjustment may be directly implemented on a base station side or a terminal device side, and OAM does not need to uniformly adjust cell coverage in an entire area. This reduces an access delay of the terminal device and a delay of subsequent data transmission.

FIG. 3 is a diagram of signaling interaction for a cell reselection process 300 according to an example embodiment of this disclosure. The example interaction process 300 may involve the terminal device 110, the first network device 120, and the second network device 130 shown in FIG. 1. For the purpose of discussion, the following describes the process 300 with reference to FIG. 1. The second cell 104 serves as a serving cell of the terminal device 110, and the first cell 102 serves as a neighboring cell. It should be understood that the process is also applicable to another communication scenario and device.

In some example embodiments, the second cell 104 may be selected as a serving cell based on the adjustment parameter $Q_{UE}$ by performing the initial cell selection process 200 described above. In some other example embodiments, the adjustment parameter $Q_{UE}$ may alternatively be not used when an initial cell is selected.

In 305, the second network device 130 corresponding to the current serving cell of the terminal device 110 generates a second message including cell reselection information, where the second message may be a system message. Only as an example, the system message may include but is not limited to SIB1, SIB2, SIB3, SIB4, and SIB5. Specifically, SIB1 may include related information used to evaluate whether a terminal device is allowed to access a cell, and define scheduling for another system message. In addition, SIB1 may further include radio resource configuration information that is common to all terminal devices and barring information applied to unified access control. SIB2 may include reselection information other than common cell reselection information for intra-frequency, inter-frequency, and/or inter-system (for example, inter-access technology) cell reselection and reselection information related to an intra-frequency cell and a neighboring cell. In other words, SIB2 is applicable to more than one cell reselection process, but is not applicable to all cell reselection processes. SIB3 may include only information related to intra-frequency cell reselection, for example, may include a cell with a specific reselection parameter (for example, a physical cell ID of a neighboring cell or $Q_{offset}$ of the neighboring cell) and a blacklisted cell. SIB4 may include only information related to inter-frequency cell reselection, that is, information about another radio frequency and inter-frequency neighboring cell related to cell reselection. For example, SIB4 may include a frequency-common cell reselection parameter and a cell-specific reselection parameter (for example, a to-be-measured carrier frequency, a subcarrier spacing, or a cell reselection priority). SIB5 may include only information related to inter-system cell reselection, that is, information about a frequency and a neighboring cell related to cell reselection. For example, SIB5 includes a frequency-common cell reselection parameter.

In 310, the first network device 120 generates a first message. The first message may be a system message including cell selection information, or another system message. The first message may be used by the terminal device 110 that attempts to perform cell reselection.

In 315 and 320, the second network device 130 and the first network device 120 broadcast system messages in the second cell 104 and the first cell 102 respectively. The first network device 120 and the second network device 130 may respectively monitor load statuses of the first cell 102 and the second cell 104, and determine cell load information of the cell 102 and the cell 104. Therefore, in some example embodiments, the first network device 120 and the second network device 130 may add the corresponding cell load information to the system messages.

As described above, when a result of signal measurement performed by the terminal device 110 on the serving cell meets a cell reselection condition, the terminal device 110 may start a cell reselection process. In 325, the terminal device 110 determines, based on the first message, a first adjustment parameter $Q_{UE,n}$ associated with cell selection.

Similar to the process 200, the first message may indicate the first adjustment parameter $Q_{UE,n}$ in various manners.

In some example embodiments, the first message may include the cell load information of the first cell 102. For example, the cell load information may include a PRB utilization rate associated with the first cell 102, a quantity of terminal devices in an activated state, a radio resource management RRC connection capacity, a quantity of RRC connections, a RACH delay, a cell capacity, and a transport network layer capacity. In this embodiment, the terminal device 110 may determine the first adjustment parameter $Q_{UE,n}$ based on the received cell load information.

In some example embodiments, the first network device 120 may determine a plurality of corresponding candidate adjustment parameters for a plurality of terminal device service types based on the cell load information of the first cell 102. In this embodiment, the first message may include a plurality of candidate adjustment parameters, or the first message may include a table of mapping between a plurality of terminal device service types and a plurality of candidate adjustment parameters. In this way, the terminal device 110 may select an appropriate adjustment parameter as the first adjustment parameter $Q_{UE,n}$ based on a service type or a service requirement of the terminal device 110.

The first network device 120 may determine a candidate adjustment parameter according to Formula (5). The terminal device 110 may determine the first adjustment parameter $Q_{UE,n}$ in a manner similar to that described in the process 200. Therefore, details are not described herein again.

In some example embodiments, the terminal device 110 determines a second adjustment parameter $Q_{UE,s}$ in 330 based on the second message received from the second network device 130. Further, the terminal device 110 may determine the second adjustment parameter $Q_{UE,s}$ based on the service type or the service requirement of the terminal device 110.

In some other example embodiments, because the second network device 130 interacts with the first network device 120, the second network device 130 may also add the cell load information of the first cell 102 or the second adjustment parameter $Q_{UE,s}$ to the system message. For example, the cell reselection system message of the second cell includes the cell load information of the first cell 102 or the second adjustment parameter $Q_{UE,s}$. In this embodiment, the terminal device 110 may not need to determine the first adjustment parameter $Q_{UE,n}$ by using the first message from the first network device 120.

In 335, the terminal device 110 performs signal measurement on the first cell 102 and obtains a signal measurement result based on the determined first adjustment parameter $Q_{UE,n}$. Similarly, in 340, the terminal device 110 may perform signal measurement on the second cell 104 and obtain a signal measurement result based on the determined second adjustment parameter $Q_{UE,s}$. The terminal device 110 may compare the signal measurement result of the first cell 102 with the signal measurement result of the serving cell 104. For example, the terminal device 110 may compare the signal measurement results based on an R criterion.

In some example embodiments, the terminal device 110 may obtain an R criterion-based measurement result according to Formula (8) and Formula (9):

$$Rs = Q_{meas,s} + Q_{hyst} - Q_{offsettemp} + Q_{UE,s} \qquad (8)$$

$$Rn = Q_{meas,n} - Q_{offset} - Q_{offsettemp} + Q_{UE,n} \qquad (9)$$

Herein, Rs represents an R value of the second cell 104, Rn represents an R value of the first cell 102, $Q_{meas,s}$ represents an RSRP value measured in the second cell 104, $Q_{meas,n}$ represents an RSRP value measured in the first cell 102, $Q_{hyst}$ represents a hysteresis threshold of a ranking standard, $Q_{offset}$ represents an offset corresponding to the first cell 102, and $Q_{offsettemp}$ represents a temporary offset.

It should be understood that the manner of adjusting the signal measurement results by using the first adjustment parameter $Q_{UE,n}$ and the second adjustment parameter $Q_{UE,s}$ shown in Formula (8) and Formula (9) is merely an example, and is not a limitation. In practice, Formula (8) and Formula (9) may be modified or replaced as required.

In an example, at least one of the first adjustment parameter $Q_{UE,n}$ and the second adjustment parameter $Q_{UE,s}$ may be zero. In other words, the terminal device 110 may adjust one or more of the signal measurement results of the serving cell and the neighboring cell as required. In another example, the first adjustment parameter $Q_{UE,n}$ and the second adjustment parameter $Q_{UE,s}$ may be used as adjustment factors of any one or more parameters in Formula (8) and Formula (9) respectively, and any operation manner is used. For example, the first adjustment parameter $Q_{UE,n}$ and the second adjustment parameter $Q_{UE,s}$ may be applied to at least one monomial in Formula (8) and Formula (9) respectively. In another example, the first adjustment parameter $Q_{UE,n}$ and the second adjustment parameter $Q_{UE,s}$ may be used as one or more monomial exponents or the like in Formula (8) and Formula (9) respectively. In 345, the terminal device 110 determines whether the signal measurement result of the first cell 102 meets a cell selection criterion. For example, in an R criterion-based embodiment, the terminal device 110 may rank Rs and Rn, and select a cell with a highest R value to camp on.

If the terminal device 110 determines, in 345, that the signal measurement result of the first cell 102 meets the cell selection criterion, in 350, the terminal device 110 determines the first cell 102 as a target cell for camping on. In an example, if the signal measurement result of the first cell 102 is better than the signal measurement result of the second cell 104, for example, the R value (that is, Rn) of the first cell 102 is the highest, the terminal device 110 may reselect the first cell 102 as the target cell.

It should be understood that although the operations in the process 300 are described in a particular order, this should not be understood as requiring the operations to be completed in the particular order shown or in a sequential order, or performing all of the illustrated operations to obtain a desired result. For example, step 305 may be performed before or after step 310, and step 315 may be performed before or after step 320. Sometimes, multitasking or parallel processing is beneficial. Similarly, although the foregoing descriptions include some specific implementation details, this should not be construed as limiting the scope of any invention or claims, but rather as descriptions of specific example embodiments that may be specific to a particular invention. Some features described in this specification in the context of separate example embodiments may alternatively be integrated into a single example embodiment. Conversely, various features that are described in the context of a single example embodiment may alternatively be implemented separately in a plurality of example embodiments or in any appropriate sub-combination.

According to an example embodiment of this disclosure, a cell reselection mechanism is provided. In the mechanism, a terminal device may autonomously select, based on load information that is broadcast by a network side or an adjustment parameter that is associated with cell selection and that is provided by the network side, a cell whose load status meets a requirement for camping on. In addition, in this manner, personalized dynamic adjustment may be directly implemented on a base station side or a terminal device side. This reduces signaling interaction between base stations, and reduces an access delay of the terminal device and a delay of subsequent data transmission.

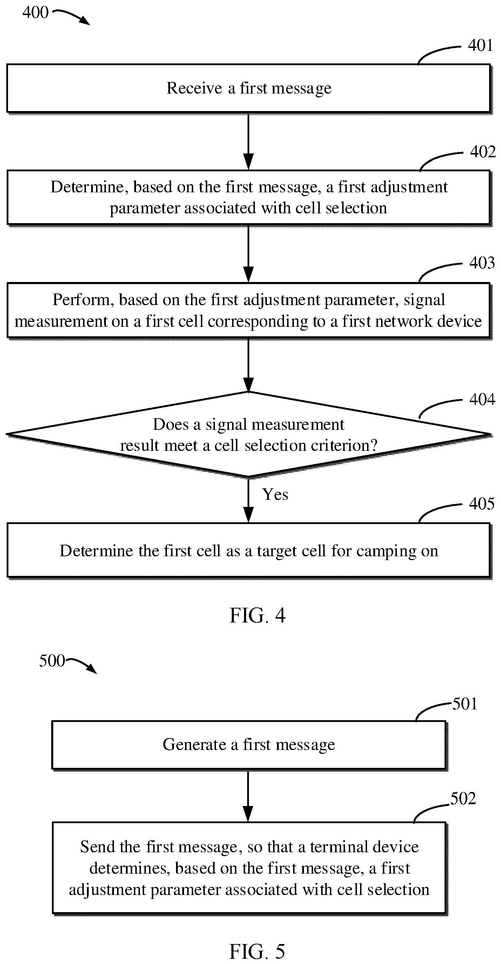

FIG. 4 is a flowchart of a cell selection method 400 according to an example embodiment of this disclosure. The method 400 may be implemented at the terminal device 110 shown in FIG. 1. For ease of discussion, the following describes the method 400 with reference to FIG. 1. It should be understood that the method 400 is also applicable to another communication scenario and device.

In 401, the terminal device 110 receives a first message from the first network device 120. The first message may cause the terminal device 110 that attempts to access the first cell 102 to determine a first adjustment parameter $Q_{UE}$ associated with cell selection. The first message may be a system message that is broadcast by the first network device 120 in the first cell 102. In some example embodiments, when performing signal measurement on a candidate cell based on a cell selection criterion, the terminal device 110 may process a measurement result by using the first adjustment parameter $Q_{UE}$.

In some example embodiments, the first message may include a table of mapping between a plurality of service types and a plurality of candidate adjustment parameters. In some other example embodiments, the first message may include a plurality of candidate adjustment parameters corresponding to a plurality of service types, and the plurality of candidate adjustment parameters are determined by the first network device 120 for the plurality of service types based on cell load information of the first cell 102. In still some other example embodiments, the first message may include the cell load information of the first cell 102 that is used to determine the first adjustment parameter $Q_{UE}$.

In some example embodiments, the first network device 120 and the second network device 130 may include corresponding cell load information in system messages. In some other example embodiments, because the second network device 130 may interact with the first network device 120, the second network device 130 may also add the cell load information of the first cell 102 to the system message. For example, the cell reselection system message of the second cell includes the cell load information of the first cell 102. In this embodiment, the terminal device 110 may not need to determine the first adjustment parameter $Q_{UE}$ by using the first message from the first network device 120.

In 402, the terminal device 110 determines, based on the first message, the first adjustment parameter associated with cell selection. In some example embodiments, the terminal device 110 may select, from the plurality of candidate adjustment parameters, a candidate adjustment parameter corresponding to a service type of the terminal device 110 as the first adjustment parameter.

In an embodiment in which the first message includes a mapping table or a plurality of candidate adjustment parameters, the terminal device 110 may select an appropriate adjustment parameter based on a service type or a service requirement of the terminal device 110. In an embodiment in which the first message includes the cell load information of the first cell 102, the cell load information may include but is not limited to a physical resource block utilization rate associated with the first cell 102, a quantity of terminal devices in an activated state, a radio resource management RRC connection capacity, a quantity of RRC connections, a random access channel delay, a cell capacity, and a transport network layer capacity. In this embodiment, the terminal device 110 may determine the first adjustment parameter $Q_{UE}$ according to Formula (5) or different calculation manners. Similarly, when determining the first adjustment parameter $Q_{UE}$, the terminal device 110 may further consider the service type or the service requirement of the terminal device 110.

In some example embodiments, the terminal device 110 may alternatively determine the first adjustment parameter $Q_{UE}$ by using an AI algorithm, and iteratively update the coefficients a, b, and c related to the load balancing information in Formula (5). For example, values of the coefficients a, b, and c related to the load balancing information may depend on the terminal device service type.

In an example, if the terminal device 110 requires a large bandwidth, the coefficient a related to the PRB utilization rate may be relatively large, for example, a = 10, and the other coefficients may be relatively small, for example, b = -0.01, and c = -0.01. This indicates that the first adjustment parameter $Q_{UE}$ corresponding to the service type of the terminal device 110 is mainly determined based on the PRB utilization rate. Particularly, the coefficients b and c may alternatively be 0. In an embodiment in which the AI algorithm is used, if the quantity of available PRBs is greater than a PRB threshold hyper-parameter of the AI algorithm, an obtained value of the first adjustment parameter $Q_{UE}$ is positive; or if the quantity of available PRBs is less than the PRB threshold hyper-parameter of the AI algorithm, an obtained value of the first adjustment parameter $Q_{UE}$ is negative.

In another example, if the terminal device 110 requires a low access delay, the coefficient b related to the RACH access delay may be relatively large, for example, b = -10, and the other coefficients may be relatively small, for example, a = 0.01, and c = -0.01. This indicates that the first adjustment parameter $Q_{UE}$ corresponding to the service type of the terminal device 110 is mainly determined based on the RACH delay. Particularly, the coefficients a and c may alternatively be 0. In an embodiment in which the AI algorithm is used, if the RACH delay is greater than a RACH delay threshold hyper-parameter of the AI algorithm, an obtained value of the first adjustment parameter $Q_{UE}$ is negative; or if the RACH delay is less than the RACH delay threshold hyper-parameter of the AI algorithm, an obtained value of the first adjustment parameter $Q_{UE}$ is positive.

In still another example, if the terminal device 110 requires a quantity of RRC connections, the coefficient c related to the quantity of RRC connections may be relatively large, for example, c = -10, and the other coefficients may be relatively small, for example, a = 0.01, and b = 0.01. This indicates that the first adjustment parameter $Q_{UE}$ corresponding to the service type of the terminal device 110 is mainly determined based on the quantity of RRC connections. Particularly, the coefficients a and b may alternatively be 0. In an embodiment in which the AI algorithm is used, if the quantity of RRC connections is greater than an RRC connection quantity threshold hyper-parameter of the AI algorithm, an obtained value of the first adjustment parameter $Q_{UE}$ is negative; or if the quantity of RRC connections is less than the RRC connection quantity threshold hyper-parameter of the AI algorithm, an obtained value of the first adjustment parameter $Q_{UE}$ is positive.

It should be understood that a service type or a service requirement of a terminal device is not limited to the foregoing type or requirement based on a bandwidth, an access delay, or a quantity of RRC connections, and may further include another existing type or requirement or a future type or requirement, and a combination of a plurality of different types or requirements. In addition, in practice, the terminal device 110 may adjust, according to a requirement of the terminal device 110, the coefficients a, b, and c related to the load balancing information, the associated thresholds, and the like, to adapt to the requirement of the terminal device 110. In this way, diversified requirements of the terminal device can be met better than direct calculation by a network side, and universality is better and more personalized.

In some example embodiments, the terminal device 110 may not have a module configured to determine the first adjustment parameter $Q_{UE}$. For example, the terminal device 110 has no AI algorithm or reinforcement learning model. In this embodiment, the first adjustment parameter $Q_{UE}$ may be set to 0 by default.

In 403, the terminal device 110 performs, based on the first adjustment parameter $Q_{UE}$, signal measurement on the first cell 102 corresponding to the first network device 120. For example, the terminal device 110 may measure RSRP and RSRQ values of a signal received from the first cell 102, and adjust a signal measurement result by using the first adjustment parameter $Q_{UE}$.

In an embodiment of cell reselection, the terminal device 110 may further perform signal measurement on a serving cell of the terminal device 110, that is, the second cell 104. For example, the terminal device 110 may perform signal measurement on the second cell 104 based on a second adjustment parameter. The second adjustment parameter may be determined by the terminal device 110 from a second message received by the terminal device 110 from the second network device 130 corresponding to the second cell 104 and an optional service type of the terminal device 110.

In 404, the terminal device 110 determines whether the signal measurement result meets the cell selection criterion. The cell selection criterion may include an S criterion, an R criterion, or any other appropriate criterion. For example, in an embodiment of initial cell selection, the terminal device 110 determines whether the signal measurement result of the first cell 102 meets Srxlev' > 0 and Squal' > 0. In an embodiment of cell reselection, the terminal device 110 may compare the signal measurement result Rn of the first cell 102 with the signal measurement result Rs of the second cell 104.

If the terminal device 110 determines, in 404, that the signal measurement result meets the cell selection criterion, in 405, the terminal device 110 determines the first cell 102 as a target cell for camping on. In an embodiment of initial cell selection, if the signal measurement result of the first cell 102 is Srxlev' > 0 and Squal' > 0, the terminal device 110 may determine the first cell 102 as the target cell for camping on. In an embodiment of cell reselection, if the signal measurement result of the first cell 102 is better than the signal measurement result of the second cell 104, for example, Rn > Rs, the terminal device 110 may determine the first cell 102 as the target cell for camping on.

According to the method provided in the embodiments of this disclosure, flexible and dynamic cell selection can be implemented on a terminal device side. In the method, a result of comparing signal measurement and the cell selection criteria is adjusted based on real-time load statuses of the serving cell and a neighboring cell. In addition, the terminal device may select an appropriate adjustment parameter from the plurality of adjustment parameters based on the service type and the requirement of the terminal device. In this way, personalized load balancing can be quickly implemented in a network.

FIG. 5 is a flowchart of a cell selection method 500 according to an example embodiment of this disclosure. The method 500 may be implemented at the first network device 120 shown in FIG. 1. For ease of discussion, the following describes the method 500 with reference to FIG. 1. It should be understood that the method 500 is also applicable to another communication scenario and device.

In 501, the first network device 120 generates a first message. The first message may cause the terminal device 110 that attempts to access the first cell 102 to determine a first adjustment parameter $Q_{UE}$ associated with cell selection. The first message may indicate the first adjustment parameter $Q_{UE}$ in various manners.

In some example embodiments, the first message may include cell load information of the first cell 102. The cell load information may include but is not limited to a physical resource block utilization rate associated with the first cell 102, a quantity of terminal devices in an activated state, a radio resource management RRC connection capacity, a quantity of RRC connections, a random access channel delay, a cell capacity, and a transport network layer capacity. In this embodiment, the terminal device 110 may determine the first adjustment parameter $Q_{UE}$ based on the received cell load information.

In some example embodiments, the first message may include a table of mapping between a plurality of service types and a plurality of candidate adjustment parameters. In some other example embodiments, the first message may include a plurality of candidate adjustment parameters corresponding to a plurality of service types, and the plurality of candidate adjustment parameters are determined by the first network device 120 for the plurality of service types based on cell load information of the first cell 102. In this embodiment, the terminal device 110 may select the appropriate first adjustment parameter $Q_{UE}$ from the candidate adjustment parameters based on a service type or a service requirement of the terminal device 110.

In an embodiment in which the first message includes a mapping table or a plurality of candidate adjustment parameters, the first network device 120 may determine a plurality of corresponding candidate adjustment parameters for a plurality of terminal device service types based on the cell load information of the first cell 102, for example, may determine the candidate adjustment parameters according to Formula (5). To obtain a more accurate candidate adjustment parameter, the first network device 120 may calculate the candidate adjustment parameter by using an AI algorithm or a reinforcement learning model, and iteratively update the coefficients a, b, and c related to the load balancing information in Formula (5). When the network device runs for a period of time, if current service load of a cell that is obtained through calculation does not match a target load status of the cell, the reinforcement learning model may be used to adjust the coefficients a, b, and c, so that the service load of the cell evolves towards the target load status.

In some example embodiments, values of the coefficients a, b, and c related to the load balancing information may depend on the terminal device service type. In an example, for a service type that requires a large bandwidth, the coefficient a related to the PRB utilization rate may be relatively large, for example, a = 10, and the other coefficients may be relatively small, for example, b = -0.01, and c = -0.01. This indicates that the adjustment parameter $Q_{UE,i}$ corresponding to this terminal device service type is mainly determined based on the PRB utilization rate. Particularly, the coefficients b and c may alternatively be 0. When the AI algorithm is used, if the quantity of available PRBs is greater than a PRB threshold hyper-parameter of the AI algorithm, an obtained value of the adjustment parameter $Q_{UE}$ is positive; or if the quantity of available PRBs is less than the PRB threshold hyper-parameter of the AI algorithm, an obtained value of the adjustment parameter $Q_{UE}$ is negative.

In another example, for a service type that requires a low access delay, the coefficient b related to the RACH access delay may be relatively large, for example, b = -10, and the other coefficients may be relatively small, for example, a = 0.01, and c = -0.01. This indicates that the adjustment parameter $Q_{UE,i}$ corresponding to this terminal device service type is mainly determined based on the RACH delay. Particularly, the coefficients a and c may alternatively be 0. In an embodiment in which the AI algorithm is used, if the RACH delay is greater than a RACH delay threshold hyper-parameter of the AI algorithm, an obtained value of the adjustment parameter $Q_{UE,i}$ is negative; or if the RACH delay is less than the RACH delay threshold hyper-parameter of the AI algorithm, an obtained value of the adjustment parameter $Q_{UE,i}$ is positive.

In still another example, for a service type that requires a quantity of RRC connections, the coefficient c related to the quantity of RRC connections may be relatively large, for example, c = -10, and the other coefficients may be relatively small, for example, a = 0.01, and b = 0.01. This indicates that the adjustment parameter $Q_{UE}$ corresponding to this terminal device service type is mainly determined based on the quantity of RRC connections. Particularly, the coefficients a and b may alternatively be 0. In an embodiment in which the AI algorithm is used, if the quantity of RRC connections is greater than an RRC connection quantity threshold hyper-parameter of the AI algorithm, an obtained value of the adjustment parameter $Q_{UE,i}$ is negative; or if the quantity of RRC connections is less than the RRC connection quantity threshold hyper-parameter of the AI algorithm, an obtained value of the adjustment parameter $Q_{UE,i}$ is positive.

In some example embodiments, the first network device 120 may determine, based on a processing capability of the first network device 120 or a processing capability of the terminal device 110, a specific form in which the first message indicates the first adjustment parameter $Q_{UE}$.

In 502, the first network device 120 sends the first message to the terminal device 110, so that the terminal device 110 determines, based on the first message, the first adjustment parameter associated with cell selection. For example, the first message may be a system message that is broadcast in the first cell 102.

According to the method provided in the embodiments of this disclosure, flexible and dynamic load balancing can be implemented within a cell or between cells. In the method, an adjustment parameter associated with a real-time load status of a base station is used to affect a cell selection process on a terminal device side, so that each base station can dynamically adjust cell load, and cell selection information of all base stations in an entire area does not need to be adjusted uniformly by using an OAM system. In addition, when determining the adjustment parameter, the base station may further consider service types and service requirements of various terminal devices, so as to implement personalized load balancing.

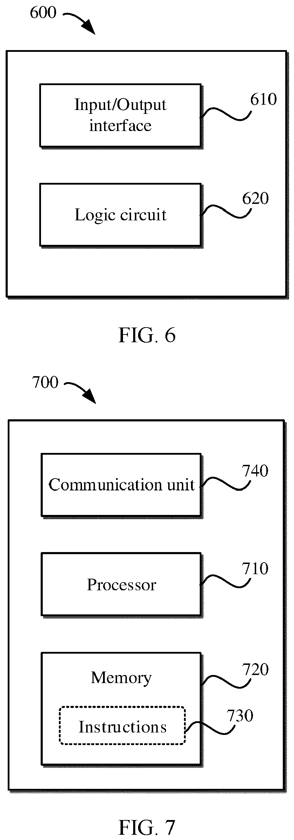

FIG. 6 is a block diagram of a communication apparatus 600 according to an example embodiment of this disclosure. The communication apparatus 600 may be implemented as the terminal device 110, the first network device 120, the second network device 130, a part of the foregoing device, a chip in the foregoing device, or the like shown in FIG. 1. It should be understood that the communication apparatus 600 is used for example purposes only and does not imply any limitation on the scope of this disclosure. Embodiments of this disclosure may be further embodied in different communication apparatuses. In addition, it should be further understood that the communication apparatus 600 may further include other elements, modules, or entities, which are not shown for clarity purposes. However, it does not mean that the embodiments of this disclosure do not have these elements or entities. The scope of this disclosure is not limited in this respect.

As shown in FIG. 6, the communication apparatus 600 includes an input/output interface 610 and a logic circuit 620. The input/output interface 610 is coupled to the logic circuit 620. In this embodiment of this disclosure, the input/output interface 610 may be integrated to implement a sending/receiving function, or may be separately implemented as an input interface for receiving and an output interface for sending as independent components. For example, the input/output interface 610 shown in FIG. 6 is an integrated example implementation.

In an embodiment in which the communication apparatus 600 is implemented as the terminal device 110 shown in FIG. 1, the input/output interface 610 may be configured to receive a first message. The logic circuit 620 is configured to determine, based on the first message received by the input/output interface 610, a first adjustment parameter associated with cell selection. The logic circuit 620 is further configured to perform, based on the first adjustment parameter, signal measurement on a first cell corresponding to the first network device 120. The logic circuit 620 is further configured to select, based on a signal measurement result, a target cell for camping on. For example, if the signal measurement result of the first cell meets a cell selection criterion, the logic circuit 620 may determine the first cell as the target cell for camping on.

In some example embodiments, the first message may include a table of mapping between at least one service type and at least one candidate adjustment parameter, or the first message may include at least one candidate adjustment parameter corresponding to at least one service type. The at least one candidate adjustment parameter is determined by the first network device 120 for the at least one service type based on cell load information of the first cell. In the foregoing example embodiment, the logic circuit 620 is further configured to select, from the at least one candidate adjustment parameter, a candidate adjustment parameter corresponding to a service type of the communication apparatus 600 as the first adjustment parameter.

In some example embodiments, the first message may include cell load information of the first cell, for example, a physical resource block utilization rate associated with the first cell, a quantity of terminal devices in an activated state, a radio resource management RRC connection capacity, a quantity of RRC connections, a random access channel delay, a cell capacity, and a transport network layer capacity. In the foregoing embodiment, the logic circuit 620 is configured to determine the first adjustment parameter based on the cell load information.

In some example embodiments, the logic circuit 620 is further configured to: perform signal measurement on a serving cell of the communication apparatus 600, and determine, based on the signal measurement result of the first cell and a signal measurement result of the serving cell, the target cell for camping on. For example, if the signal measurement result of the first cell is better than the signal measurement result of the serving cell, the logic circuit 620 may determine the first cell as the target cell for camping on.

In the foregoing example embodiment, the input/output interface 610 is configured to receive a second message from a second network device corresponding to the serving cell. The logic circuit 620 is further configured to: determine a second adjustment parameter based on the received second message and a service type of the communication apparatus 600, and perform signal measurement on the serving cell based on the second adjustment parameter. At least one of the first adjustment parameter and the second adjustment parameter may be zero.

In an embodiment in which the communication apparatus 600 is implemented as the first network device 120 shown in FIG. 1, the logic circuit 620 may be configured to generate a first message. The input/output interface 610 may be configured to send the first message to a terminal device 110, so that the terminal device 110 determines, based on the first message, a first adjustment parameter associated with cell selection.

In the foregoing example embodiment, the input/output interface 610 may determine the at least one candidate adjustment parameter for the at least one service type based on cell load information of the first cell. In this embodiment, the first message may include a table of mapping between at least one service type and at least one candidate adjustment parameter, or may include at least one candidate adjustment parameter corresponding to at least one service type, so that the terminal device selects the first adjustment parameter associated with cell selection.

It should be understood that the communication apparatus 600 in FIG. 6 can be configured to perform the foregoing processes implemented by the terminal device 110 and the first network device 120 in the embodiments with reference to FIG. 2 to FIG. 5. To avoid repetition, details are not described herein again.

FIG. 7 is a block diagram of a communication apparatus 700 that may implement some embodiments of this disclosure. The communication apparatus 700 can be configured to implement the terminal device 110, the first network device 120, and the second network device 130 shown in FIG. 1. The communication apparatus 700 may alternatively be implemented as a chip or a chip system. It should be understood that the communication apparatus 700 is used for example purposes only and does not imply any limitation on the scope of this disclosure. Embodiments of this disclosure may be further embodied in different devices. It should be further understood that the communication apparatus 700 may further include other elements or entities, which are not shown for ease of description. However, it does not mean that the embodiments of this disclosure do not have these elements or entities.

As shown in FIG. 7, the communication apparatus 700 includes a processor 710, and the processor 710 controls operations and functions of the communication apparatus 700. For example, in some example embodiments, the processor 710 may perform various operations by using instructions 730 stored in a memory 720 coupled to the processor 710. The memory 720 may be of any appropriate type applicable to a local technical environment, and may be implemented by using any appropriate data storage technology, including but not limited to a semiconductor-based storage device, a magnetic storage device and system, and an optical storage device and system. Although only one memory unit is shown in FIG. 7, there may be a plurality of physically different memory units in the communication apparatus 700. It should be understood that the processor 710 and the memory 720 may be disposed separately as independent components, or may be integrated together. This is not limited in this application.

The processor 710 may be of any appropriate type applicable to a local technical environment, and may include but is not limited to one or more of a general-purpose computer, a special-purpose computer, a microcontroller, a digital signal processor (Digital Signal Processor, DSP), and a controller-based multi-core controller architecture. The communication apparatus 700 may alternatively include a plurality of processors, such as application-specific integrated circuit chips, which in time belong to a clock synchronized with a main processor. The processor 710 is coupled to a communication unit 740. The communication unit 740 may receive and send information by using a radio signal or through an optical fiber, a cable, and/or another component.

The memory 720 may include one or more nonvolatile memories and one or more volatile memories. An example of the nonvolatile memory includes but is not limited to a read-only memory (Read-Only Memory, ROM), an erasable programmable read-only memory (Erasable Programmable Read-Only Memory, EPROM), a flash memory, a hard disk, a compact disc (Compact Disc, CD), a digital versatile disc (Digital Versatile Disc, DVD), or another magnetic storage and/or optical storage. An example of the volatile memory includes but is not limited to a random access memory (Random Access Memory, RAM) and the like.

Embodiments of this disclosure may be implemented by using a computer program, so that the communication apparatus 700 can perform any process discussed with reference to FIG. 2 to FIG. 5. Embodiments of this disclosure may alternatively be implemented by using hardware or a combination of software and hardware. The computer program includes computer-executable instructions 730 executed by the processor 710. The computer program may be stored in the memory 720. The processor 710 may perform any appropriate action and processing by loading the computer program to a RAM.

In the foregoing embodiment in which the terminal device 110 or the first network device 120 determines an adjustment parameter by using a machine learning algorithm module, a reinforcement learning model, or the like, these modules and models may be stored in the memory 720 in a manner of the computer program code or the instructions 730, and the processor executes the program code or the instruction in the memory 720 to enable the communication apparatus 700 to perform the processing processes implemented by the terminal device 110 or the first network device 120 in FIG. 4 and FIG. 5.

In some embodiments, the computer program may be tangibly included in a computer-readable medium. The computer-readable medium may be included in the communication apparatus 700 (for example, in the memory 720) or another storage device that may be accessed by the communication apparatus 700. The computer program may be loaded from the computer-readable medium to a RAM for execution. The computer-readable medium may include any type of tangible nonvolatile memory, such as a ROM, an EPROM, a flash memory, a hard disk, a CD, or a DVD.

Generally, various example embodiments of this disclosure may be implemented in hardware or dedicated circuit, software, logic, or any combination thereof. Some aspects may be implemented in hardware, while other aspects may be implemented in firmware or software that may be executed by a controller, a microprocessor, or another computing device. When aspects of the example embodiments of this disclosure are illustrated or described as block diagrams or flowcharts, or represented using specific other figures, it may be understood that the blocks, apparatuses, systems, technologies, or methods described herein may be implemented as non-limiting examples in hardware, software, firmware, dedicated circuit or logic, general-purpose hardware or controllers, or other computing devices, or some combinations thereof.

In an example, example embodiments of this disclosure may be described in the context of machine-executable or computer-executable instructions. The machine-executable instructions are, for example, a program module executed in a device included in a real or virtual processor of a target. Generally, the program module includes a routine, a program, a library, an object, a class, a component, a data structure, and the like, and executes a specific task or implements a specific abstract data structure. In various example embodiments, functions of the program modules may be combined or split between the described program modules. The machine-executable instructions for the program module may be executed locally or within a distributed device. In the distributed device, the program module may be located in both a local storage medium and a remote storage medium.

Computer program code used to implement the methods disclosed in this disclosure may be written in one or more programming languages. The computer program code may be provided for a processor of a general-purpose computer, a special-purpose computer, or another programmable data processing apparatus. Therefore, when the program code is executed by the computer or the another programmable data processing apparatus, functions/operations specified in the flowcharts and/or block diagrams are implemented. The program code may be executed completely on a computer, partially on a computer, as an independent software package, partially on a computer and partially on a remote computer, or completely on a remote computer or server.

In the context of this disclosure, the computer program code or related data may be carried by any appropriate carrier, so that a device, an apparatus, or a processor can perform various processing and operations described above. An example of the carrier includes a signal, a computer-readable medium, or the like. An example of the signal may include a propagating signal in electrical, optical, radio, sound, or another form, such as a carrier wave or an infrared signal.

In the context of this disclosure, a machine-readable medium or a computer-readable medium may be any tangible medium that includes or stores a program for or has a program related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

In addition, although the operations are described in a particular order, this should not be understood as requiring the operations to be completed in the particular order shown or in a sequential order, or performing all of the illustrated operations to obtain a desired result. In some cases, multitasking or parallel processing is beneficial. Similarly, although the foregoing descriptions include some specific implementation details, this should not be construed as limiting the scope of any invention or claims, but rather as descriptions of specific example embodiments that may be specific to a particular invention. Some features described in this specification in the context of separate example embodiments may alternatively be integrated into a single example embodiment. Conversely, various features that are described in the context of a single example embodiment may alternatively be implemented separately in a plurality of example embodiments or in any appropriate sub-combination.

Although the subject matter has been described in language specific to structural features and/or methodological actions, it should be understood that the subject matter defined in the appended claims is not limited to the specific features or actions described above. Rather, the specific features and actions described above are disclosed as example forms of implementing the claims.

**Claims**

**1.** A cell selection method, comprising:

receiving, by a terminal device, a first message from a first network device;

determining, by the terminal device based on the first message, a first adjustment parameter associated with cell selection;

performing, by the terminal device based on the first adjustment parameter, signal measurement on a first cell corresponding to the first network device; and

if a signal measurement result meets a cell selection criterion, determining, by the terminal device, the first cell as a target cell for camping on.

2. The method according to claim 1, wherein the first message comprises a table of mapping between at least one service type and at least one candidate adjustment parameter.

3. The method according to claim 1, wherein the first message comprises at least one candidate adjustment parameter corresponding to at least one service type, and the at least one candidate adjustment parameter is determined by the first network device for the at least one service type based on cell load information of the first cell.

4. The method according to claim 2 or 3, wherein the determining a first adjustment parameter comprises:
selecting, by the terminal device from the at least one candidate adjustment parameter, a candidate adjustment parameter corresponding to a service type of the terminal device as the first adjustment parameter.

5. The method according to claim 1, wherein the first message comprises cell load information of the first cell, and the determining a first adjustment parameter comprises:
determining, by the terminal device, the first adjustment parameter based on the cell load information.

6. The method according to claim 3 or 5, wherein the cell load information comprises at least one of the following: a physical resource block utilization rate associated with the first cell, a quantity of terminal devices in an activated state, a radio resource management RRC connection capacity, a quantity of RRC connections, a random access channel delay, a cell capacity, and a transport network layer capacity.

7. The method according to claim 1, further comprising:

performing, by the terminal device, signal measurement on a serving cell of the terminal device; and
the determining the first cell as a target cell for camping on further comprises:
if the signal measurement result of the first cell is better than a signal measurement result of the serving cell, determining, by the terminal device, the first cell as the target cell for camping on.

8. The method according to claim 7, wherein the performing signal measurement on a serving cell comprises:
performing, by the terminal device, the signal measurement on the serving cell based on a second adjustment parameter, wherein the second adjustment parameter is determined by the terminal device based on a second message received by the terminal device from a second network device corresponding to the serving cell and a service type of the terminal device.

9. The method according to claim 8, wherein at least one of the first adjustment parameter and the second adjustment parameter is zero.

10. A cell selection method, comprising:

generating, by a first network device, a first message; and
sending, by the first network device, the first message to a terminal device, so that the terminal device determines, based on the first message, a first adjustment parameter associated with cell selection.

11. The method according to claim 10, wherein the first message comprises a table of mapping between at least one service type and at least one candidate adjustment parameter.

12. The method according to claim 10, wherein the first network device corresponds to a first cell, the first message comprises at least one candidate adjustment parameter corresponding to at least one service type, and the at least one candidate adjustment parameter is determined by the first network device for the at least one service type based on cell load information of the first cell.

**13.** The method according to claim 10, wherein the first network device corresponds to a first cell, and the first message comprises cell load information of the first cell.

**14.** The method according to claim 12 or 13, wherein the cell load information comprises at least one of the following: a physical resource block utilization rate associated with the first cell, a quantity of terminal devices in an activated state, a radio resource management RRC connection capacity, a quantity of RRC connections, a random access channel delay, a cell capacity, and a transport network layer capacity.

**15.** A terminal device, comprising:

at least one processor; and
at least one memory comprising computer program code, wherein
the at least one memory and the computer program code are configured with the at least one processor to enable the terminal device to perform the following steps:

receiving a first message from a first network device;
determining, based on the first message, a first adjustment parameter associated with cell selection;
performing, based on the first adjustment parameter, signal measurement on a first cell corresponding to the first network device; and
if a signal measurement result meets a cell selection criterion, determining the first cell as a target cell for camping on.

**16.** The terminal device according to claim 15, wherein the first message comprises a table of mapping between at least one service type and at least one candidate adjustment parameter.

**17.** The terminal device according to claim 15, wherein the first message comprises at least one candidate adjustment parameter corresponding to at least one service type, and the at least one candidate adjustment parameter is determined by the first network device for the at least one service type based on cell load information of the first cell.

**18.** The terminal device according to claim 16 or 17, wherein the processor is further configured to determine the first adjustment parameter in the following manner:
selecting, from the at least one candidate adjustment parameter, a candidate adjustment parameter corresponding to a service type of the terminal device as the first adjustment parameter.

**19.** The terminal device according to claim 15, wherein the first message comprises cell load information of the first cell, and the processor is further configured to determine the first adjustment parameter in the following manner:
determining the first adjustment parameter based on the cell load information.

**20.** The terminal device according to claim 17 or 19, wherein the cell load information comprises at least one of the following: a physical resource block utilization rate associated with the first cell, a quantity of terminal devices in an activated state, a radio resource management RRC connection capacity, a quantity of RRC connections, a random access channel delay, a cell capacity, and a transport network layer capacity.

**21.** The terminal device according to claim 15, wherein the processor is further configured to perform the following step:

performing signal measurement on a serving cell of the terminal device; and
the processor is further configured to determine, in the following manner, the first cell as the target cell for camping on:
if the signal measurement result of the first cell is better than a signal measurement result of the serving cell, determining the first cell as the target cell for camping on.

**22.** The terminal device according to claim 21, wherein the processor is further configured to perform the signal measurement on the serving cell in the following manner:
performing the signal measurement on the serving cell based on a second adjustment parameter, wherein the second adjustment parameter is determined by the terminal device based on a second message received by the terminal device from a second network device corresponding to the serving cell and a service type of the terminal device.

23. The terminal device according to claim 22, wherein at least one of the first adjustment parameter or the second adjustment parameter is zero.

24. A network device, comprising:

   at least one processor; and
   at least one memory comprising computer program code, wherein
   the at least one memory and the computer program code are configured with the at least one processor to enable the network device to perform the following steps:

      generating a first message; and
      sending the first message to a terminal device, so that the terminal device determines, based on the first message, a first adjustment parameter associated with cell selection.

25. The network device according to claim 24, wherein the first message comprises a table of mapping between at least one service type and at least one candidate adjustment parameter.

26. The network device according to claim 24, wherein the network device corresponds to a first cell, the first message comprises at least one candidate adjustment parameter corresponding to at least one service type, and the at least one candidate adjustment parameter is determined by the network device for the at least one service type based on cell load information of the first cell.

27. The network device according to claim 24, wherein the network device corresponds to a first cell, and the first message comprises cell load information of the first cell.

28. The network device according to claim 26 or 27, wherein the cell load information comprises at least one of the following: a physical resource block utilization rate associated with the first cell, a quantity of terminal devices in an activated state, a radio resource management RRC connection capacity, a quantity of RRC connections, a random access channel delay, a cell capacity, and a transport network layer capacity.

29. A computer-readable storage medium, wherein the computer-readable storage medium stores computer-executable instructions, and when the computer-executable instructions are executed by a processor, the processor is enabled to perform the method according to any one of claims 1 to 9 or the method according to any one of claims 10 to 14.

30. A computer program product, comprising computer-executable instructions, wherein when the computer-executable instructions are executed by a processor, the processor is enabled to perform the method according to any one of claims 1 to 9 or the method according to any one of claims 10 to 14.

31. A communication apparatus, comprising:

   an input/output interface; and
   a logic circuit, configured to perform the method according to any one of claims 1 to 9 or the method according to any one of claims 10 to 14.

FIG. 1

200

110

Terminal device

120

First network device

205

← 210 ——

215

—— 220 →

225

—— 220 →

FIG. 2

300

120
First network
device

110
Terminal
device

130
Second
network
device

310

305

320

315

325

330

335

340

345

350

FIG. 3

400 ⟍

┌─────────────────────────────────────────────┐ ⟋— 401
│                                             │
│            Receive a first message          │
│                                             │
└─────────────────────────────────────────────┘
                      │
                      ▼
┌─────────────────────────────────────────────┐ ⟋— 402
│  Determine, based on the first message, a first adjustment │
│       parameter associated with cell selection       │
└─────────────────────────────────────────────┘
                      │
                      ▼
┌─────────────────────────────────────────────┐ ⟋— 403
│  Perform, based on the first adjustment parameter, signal │
│ measurement on a first cell corresponding to a first network device │
└─────────────────────────────────────────────┘
                      │
                      ▼
              ◇ Does a signal measurement                    ⟋— 404
         result meet a cell selection criterion? ◇
                      │ Yes
                      ▼
┌─────────────────────────────────────────────┐ ⟋— 405
│   Determine the first cell as a target cell for camping on   │
└─────────────────────────────────────────────┘

FIG. 4

500 ⟍

┌─────────────────────────────────────────────┐ ⟋501
│            Generate a first message         │
└─────────────────────────────────────────────┘
                      │
                      ▼
┌─────────────────────────────────────────────┐ ⟋502
│   Send the first message, so that a terminal device   │
│     determines, based on the first message, a first     │
│  adjustment parameter associated with cell selection  │
└─────────────────────────────────────────────┘

FIG. 5

600

Input/Output
interface — 610

Logic circuit — 620

FIG. 6

700

Communication unit — 740

Processor — 710

Memory — 720

Instructions — 730

FIG. 7

| | INTERNATIONAL SEARCH REPORT | International application No. |
|---|---|---|
| | | **PCT/CN2022/081030** |

**A. CLASSIFICATION OF SUBJECT MATTER**

H04W 24/02(2009.01)i; H04W 28/08(2009.01)i; H04W 48/16(2009.01)i; H04W 48/20(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 小区, 选择, 驻留, 重选, 切换, 更换, 终端设备, 网络设备, 负载, 负荷, 均衡, 时延, cell, selection, residence, reselection, terminal device, network device, load, balanc+, delay

**C. DOCUMENTS CONSIDERED TO BE RELEVANT**

| Category* | Citation of document, with indication, where appropriate, of the relevant passages | Relevant to claim No. |
|---|---|---|
| X | CN 111556533 A (OPPO GUANGDONG MOBILE TELECOMMUNICATIONS CO., LTD.) 18 August 2020 (2020-08-18) description, paragraphs [0032]-[0183] | 1-31 |
| A | CN 106255160 A (HUAWEI TECHNOLOGIES CO., LTD.) 21 December 2016 (2016-12-21) entire document | 1-31 |
| A | CN 110831100 A (VIVO COMMUNICATION TECHNOLOGY CO., LTD.) 21 February 2020 (2020-02-21) entire document | 1-31 |
| A | CN 111083738 A (CHINA MOBILE COMMUNICATION LTD., RESEARCH INSTITUTE et al.) 28 April 2020 (2020-04-28) entire document | 1-31 |
| A | EP 2903331 A1 (ALCATEL LUCENT) 05 August 2015 (2015-08-05) entire document | 1-31 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 May 2022** | **27 May 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/081030**

| Patent document cited in search report | | | Publication date (day/month/year) | Patent family member(s) | | | Publication date (day/month/year) |
|---|---|---|---|---|---|---|---|
| CN | 111556533 | A | 18 August 2020 | None | | | |
| CN | 106255160 | A | 21 December 2016 | None | | | |
| CN | 110831100 | A | 21 February 2020 | WO | 2020029794 | A1 | 13 February 2020 |
| | | | | US | 2021168679 | A1 | 03 June 2021 |
| | | | | KR | 20210040436 | A | 13 April 2021 |
| | | | | JP | 2021533692 | A | 02 December 2021 |
| | | | | SG | 11202101386 | A1 | 30 March 2021 |
| | | | | VN | 78217 | A | 25 May 2021 |
| | | | | EP | 3836627 | A1 | 16 June 2021 |
| | | | | EP | 3836627 | A4 | 20 October 2021 |
| | | | | IN | 202127009753 | A | 23 July 2021 |
| CN | 111083738 | A | 28 April 2020 | JP | 2022508852 | A | 19 January 2022 |
| | | | | WO | 2020082945 | A1 | 30 April 2020 |
| | | | | US | 2021385718 | A1 | 09 December 2021 |
| | | | | EP | 3869856 | A1 | 25 August 2021 |
| | | | | EP | 3869856 | A4 | 22 December 2021 |
| EP | 2903331 | A1 | 05 August 2015 | WO | 2015113815 | A1 | 06 August 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110350894